# EUROPÄISCHE PATENTSCHRIFT

(11) **EP 4 003 793 B1**
(45) Veröffentlichungstag und Bekanntmachung des Hinweises auf die Patenterteilung: **12.02.2025**
(21) Anmeldenummer: 20750590.0
(22) Anmeldetag: 09.07.2020
(51) Int. Cl.: B60R 21/26

(54) **STEUERVORRICHTUNG FÜR EINEN GASGENERATOR ZUM STEUERN EINES VOLUMENSTROMS SOWIE AUFPRALLSCHUTZSYSTEM UND VERFAHREN ZUM BETREIBEN EINER SOLCHEN STEUERVORRICHTUNG**
CONTROL DEVICE FOR A GAS GENERATOR FOR CONTROLLING A VOLUMETRIC FLOW, AND IMPACT PROTECTION SYSTEM AND METHOD FOR OPERATING A CONTROL DEVICE OF THIS TYPE
DISPOSITIF DE COMMANDE POUR UN GÉNÉRATEUR DE GAZ, DESTINÉ À ASSURER LA COMMANDE D'UN FLUX VOLUMIQUE, ET SYSTÈME DE PROTECTION CONTRE LES CHOCS ET PROCÉDÉ POUR FAIRE FONCTIONNER UN TEL DISPOSITIF DE COMMANDE

(30) Priorität: 22.07.2019 DE 102019210802
(43) Veröffentlichungstag der Anmeldung: 01.06.2022
(73) Patentinhaber: Continental Automotive Technologies GmbH, 30175 Hannover (DE)
(72) Erfinder: MÜLLER, Andreas, 90411 Nürnberg (DE); BLEECK, Matthias, 90411 Nürnberg (DE)
(74) Vertreter: Continental Corporation
(86) Internationale Anmeldenummer: PCT/DE2020/200056
(87) Internationale Veröffentlichungsnummer: WO 2021/013313

(56) Entgegenhaltungen:
- DE-A1- 102015 209 019

## Beschreibung

Die Erfindung betrifft eine Steuervorrichtung für einen Gasgenerator zum Steuern eines Volumenstroms eines unter Druck gespeicherten Fluids zum Befüllen eines Luftsacks eines Kraftfahrzeugs mit einer Ventilanordnung. Dabei umfasst die Ventilanordnung ein Hauptventil mit einem Hauptventilkörper mit einer Durchgangsöffnung und einen in der Durchgangsöffnung des Hauptventilkörpers axial beweglichen Hauptventilkolben sowie ein elektrisch ansteuerbares Pilotventil mit einem Pilotventilkolben und einer Pilotventilzulaufbohrung. Der Hauptventilkolben teilt die Durchgangsöffnung in eine fluidisch über die Pilotventilzulaufbohrung mit dem Pilotventil verbundene Steuerkammer und eine fluidisch mit dem Gasgenerator verbindbare Vorkammer, wobei das Hauptventil einen Überströmkanal aufweist, der die Vorkammer und die Steuerkammer fluidisch miteinander verbindet. Innerhalb des Hauptventilkörpers zweigt mindestens eine Ablaufbohrung zum Ablassen des Fluids in den Luftsack von der Durchgangsöffnung ab, wobei mittels des Fluids und abhängig von einer Stellung des Pilotventilkolbens der Hauptventilkolben in einer ersten Betriebsstellung die wenigstens eine Ablaufbohrung verschließt und in einer zweiten Betriebsstellung die wenigstens eine Ablaufbohrung freigibt. Die Erfindung betrifft weiterhin ein Aufprallschutzsystem für ein Kraftfahrzeug mit einem Gasgenerator zum Speichern eines Fluids unter Druck und einem Luftsack, wobei der Gasgenerator dazu ausgebildet ist, ansprechend auf ein Aktivierungssignal das Fluid für den Luftsack bereitzustellen, und mit einer derartigen Steuervorrichtung zum Steuern eines Volumenstroms des unter Druck gespeicherten Fluids, wobei die Vorkammer der Durchgangsöffnung des Hauptventils fluidisch mit einem Fluidaustrittskanal des Gasgenerators verbunden ist. Zudem betrifft die Erfindung ein Verfahren zum Betreiben einer derartigen Steuervorrichtung.

Seit vielen Jahren sind in Kraftfahrzeugen Personenschutzmittel wie insbesondere ein als Rückhaltesystem ausgestaltetes Aufprallschutzsystem für den Schutz der Insassen eines Kraftfahrzeugs bei einem Unfall bekannt, wodurch Verletzungen der Insassen möglichst verhindert oder deren Schwere zumindest reduzieret werden sollen. Üblicherweise kommen hierbei Airbags zum Einsatz, deren eigentlicher Luftsack, der den Insassen im Kollisionsfall auffängt, mit einem Fluid, insbesondere einem Gas, gefüllt wird. Dabei entfaltet sich der Luftsack durch das einströmende Fluid innerhalb eines kurzen Zeitbereichs zwischen 10 ms und 50 ms zwischen einem Insassen und Teilen eines Innenraumes des Kraftfahrzeuges und bildet ein Kissen, wodurch verhindert wird, dass der Insasse gegen harte Teile des Fahrzeuginnenraums wie beispielsweise ein Lenkrad prallt.

Das Fluid wird regelmäßig in einem Gasgenerator mit einem Hochdruck zwischen 50 bar und 1000 bar bereitgestellt. Bei dem Gasgenerator kann es sich um einen sogenannten Heißgasgenerator handeln, in dem ein solches Fluid durch eine pyrotechnische Verbrennungsreaktion erzeugt wird oder auch um einen sogenannten Kaltgasgenerator, in dem bereits ein unter Druck stehendes Fluid gespeichert ist. Auch eine kombinierte Ausführung als Hybridgasgeneratoren ist möglich.

Das Aufprallschutzsystem löst üblicherweise kurz nach dem Aufprallzeitpunkt aus, d. h. erst wenn der Aufprall bereits erfolgt ist. Es sind jedoch auch bereits Aufprallschutzsysteme geplant, welche durch geeignete Sensoren und Auswertung deren Signale einen Zeitpunkt erkennen, bei dem ein Aufprall unvermeidbar ist. Dieser Zeitpunkt liegt in der sogenannten Pre-Crash-Phase und damit vor dem eigentlichen Aufprallzeitpunkt. Dabei ist vorgesehen, mit dieser Information das Aufprallschutzsystem bereits vor dem Aufprall zu aktivieren, um so die Insassen eines Fahrzeuges noch besser vor Verletzungen schützen zu können.

Insbesondere hierfür ist der Einsatz von zwei- oder mehrstufigen Gasgeneratoren geplant. Hier wird mittels einer Steuervorrichtung zum Steuern des Volumenstroms mit einer Ventilanordnung in zwei oder mehreren aufeinanderfolgenden Phasen jeweils ein bestimmter Volumenstrom des Fluids abgegeben und in den Luftsack eingeleitet. Die entsprechenden Öffnungs- und Schließbewegungen der Steuereinrichtung müssen dabei innerhalb weniger Millisekunden erfolgen und gegen hohe Fluiddrücke arbeiten.

Eine Steuervorrichtung und ein Aufprallschutzsystem der eingangs genannten Art sind beispielsweise in der DE 10 2015 209 019 A1 offenbart. Das Aufprallschutzsystem für ein Kraftfahrzeug umfasst einen Gasgenerator zum Speichern eines Gases unter Druck und einen Luftsack sowie eine Steuervorrichtung zum Steuern eines Volumenstroms des unter Druck stehenden Gases in den Luftsack. Die Steuervorrichtung umfasst ein Hauptventil in dessen Hauptventilkörper eine gestufte Durchgangsöffnung vorhanden ist und einen in der Durchgangsöffnung des Hauptventilkörpers axial geführten und entsprechend gestuften Hauptventilkolben. Zudem weist die Steuervorrichtung ein elektrisch ansteuerbares Pilotventil mit einem Pilotventilkolben und einer Pilotventilzulaufbohrung auf. Der Hauptventilkolben teilt die Durchgangsöffnung in eine fluidisch über die Pilotventilzulaufbohrung mit dem Pilotventil verbundene Steuerkammer und eine fluidisch mit dem Fluidaustrittskanal des Gasgenerators verbundene Vorkammer, wobei das Hauptventil einen Überströmkanal aufweist, der die Vorkammer und die Steuerkammer fluidisch miteinander verbindet. Innerhalb des Hauptventilkörpers zweigt eine Ablaufbohrung zum Ablassen des Gases in den Luftsack von der Durchgangsöffnung ab, wobei mittels des Gases und abhängig von einer Stellung des Pilotventilkolbens der Hauptventilkolben in einer Geschlossenstellung die wenigstens eine Ablaufbohrung verschließt und in einer Offenstellung die wenigstens eine Ablaufbohrung freigibt.

Nachteilig gestaltet sich bei einer solchen Steuervorrichtung jedoch insbesondere, dass ein sich in der Steuerkammer tatsächlich aufbauender Fluiddruck doch in einem verhältnismäßig großen Maße abweicht von dem notwendigen Aktivierungsdruck des Hauptventilkolbens zur Durchführung einer Öffnungsbewegung und/oder einer Schließbewegung und damit letztlich zum Öffnen und Schließen der Ablaufbohrung. Daraus resultiert eine entsprechend lange Ansprechzeit des Hauptventilkolbens.

Es ist daher eine erste Aufgabe der Erfindung, eine Steuervorrichtung für einen Gasgenerator zum Steuern eines Volumenstroms eines unter Druck gespeicherten Fluids zum Befüllen eines Luftsacks eines Kraftfahrzeugs anzugeben, die ein schnelles Ansprechen des Hauptventilkolbens und damit ein schnelles Öffnen und Schließen der Ablaufbohrung gewährleistet. Weiter liegt der Erfindung die zweite Aufgabe zugrunde, ein Aufprallschutzsystem für ein Kraftfahrzeug mit einer Steuervorrichtung anzugeben, bei dem ein schnelles Ansprechen des Hauptventilkolbens und damit ein schnelles Öffnen und Schließen der Ablaufbohrung gewährleistet ist. Ein dritte Aufgabe der Erfindung ist es, ein Verfahren zum Betreiben einer Steuervorrichtung bereitzustellen, durch welches ein schnelles Ansprechen des Hauptventilkolbens und damit ein schnelles Öffnen und Schließen der Ablaufbohrung ermöglicht ist.

Die erste Aufgabe wird erfindungsgemäß gelöst durch die Merkmale des Anspruchs 1. Vorteilhafte Ausführungsformen und Weiterbildungen der Erfindung sind in den Unteransprüchen und der nachfolgenden Beschreibung dargelegt.

Demnach umfasst eine Steuervorrichtung für einen Gasgenerator zum Steuern eines Volumenstroms eines unter Druck gespeicherten Fluids zum Befüllen eines Luftsacks eines Kraftfahrzeugs eine Ventilanordnung, wobei die Ventilanordnung ein Hauptventil mit einem Hauptventilkörper mit einer Durchgangsöffnung und einen in der Durchgangsöffnung des Hauptventilkörpers axial beweglichen Hauptventilkolben sowie ein elektrisch ansteuerbares Pilotventil mit einem Pilotventilkolben und einer Pilotventilzulaufbohrung aufweist. Der Hauptventilkolben teilt die Durchgangsöffnung in eine fluidisch über die Pilotventilzulaufbohrung mit dem Pilotventil verbundene Steuerkammer und eine fluidisch mit dem Gasgenerator verbindbare Vorkammer, wobei das Hauptventil einen Überströmkanal aufweist, der die Vorkammer und die Steuerkammer fluidisch miteinander verbindet. Innerhalb des Hauptventilkörpers zweigt mindestens eine Ablaufbohrung zum Ablassen des Fluids in den Luftsack von der Durchgangsöffnung ab, wobei mittels des Fluids und abhängig von einer Stellung des Pilotventilkolbens der Hauptventilkolben in einer ersten Betriebsstellung die wenigstens eine Ablaufbohrung verschließt und in einer zweiten Betriebsstellung die wenigstens eine Ablaufbohrung freigibt.

Erfindungsgemäß weist die Ventilanordnung zur Reduzierung einer Ansprechzeit des Hauptventilkolbens ein Mittel zum Steuern eines Fluiddrucks in der Steuerkammer auf, wobei das Mittel zum Steuern eines Fluiddrucks dazu ausgebildet ist, den Fluiddruck in der Steuerkammer auf einen Druck zu bringen oder zu halten, der in einem vorgegebenen Toleranzbereich um einen Aktivierungsdrucks des Hauptventilkolbens liegt.

Die Erfindung geht dabei von der Überlegung aus, dass ein besonders schnelles Befüllen des Luftsacks und dabei ein möglichst exaktes Befüllen mit einer vorgegebenen Fluidfüllmenge in den einzelnen Phasen insbesondere abhängig ist von der jeweiligen Aktivierungszeit des Hauptventilkolbens. Weiter geht die Erfindung von der Überlegung aus, dass der sich in der Steuerkammer des Hauptventils bis zur nächstfolgenden Öffnungsbewegung oder Schließbewegung des Hauptventilkolbens tatsächlich aufbauende Fluiddruck und insbesondere das Maß der Abweichung von dem jeweils notwendigen Aktivierungsdruck des Hauptventilkolbens zur Durchführung der entsprechenden Bewegung einen deutlichen Einfluss auf die Aktivierungszeit des Hauptventilkolbens haben. Daher sieht die Erfindung ein Mittel zum Steuern des Fluiddrucks in der Steuerkammer vor, wobei das Mittel dazu ausgebildet ist, den Fluiddruck in der Steuerkammer auf einen Druck zu bringen oder zu halten, der in einem vorgegebenen Toleranzbereich um den Aktivierungsdruck des Hauptventilkolbens liegt, insbesondere in etwa dem Aktivierungsdruck des Hauptventilkolbens entspricht.

Die erfindungsgemäße Ausgestaltung hat den Vorteil, dass dadurch eine Steuervorrichtung bereitgestellt wird, die ein schnelles Ansprechen des Hauptventilkolbens und damit ein schnelles Öffnen und Schließen der Ablaufbohrung gewährleistet.

Im Wesentlichen wird über das elektrisch ansteuerbare Pilotventil die Bewegung und damit die Stellung des Hauptventilkolbens und folglich insbesondere der Volumenstrom in den Luftsack gesteuert. Vorzugsweise ist das Pilotventil als Magnetventil ausgebildet. Zudem kann das Pilotventil als stromlos geschlossenes Pilotventil ausgebildet sein und eine Druckfeder aufweisen, die den Pilotventilkolben in eine Schließposition vorspannt, d.h. in eine Position, in der der Pilotventilkolben die Pilotventilzulaufbohrung verschließt. Das Pilotventil kann aber auch als stromlos offenes Pilotventil ausgebildet sein. Dann wird durch Bestromung das Pilotventil aktiv geschlossen gehalten und durch Wegnahme des Stromes geöffnet. Vorteilhaft ist dazu eine Druckfeder vorgesehen, die das Pilotventil in eine definierte Öffnungsposition vorspannt.

Der Aktivierungsdruck des Hauptventilkolbens ist derjenige theoretische Druck, der erforderlich ist, um den Hauptventilkolben zu bewegen. Dabei ist sowohl eine Bewegung in Richtung der ersten Betriebsstellung als auch eine Bewegung in Richtung der zweiten Betriebsstellung umfasst. Bei einer Bewegung in Richtung der ersten Betriebsstellung ist der Aktivierungsdruck des Hauptventilkolbens derjenige Druck innerhalb der Steuerkammer, der mindestens notwendig ist, um den Hauptventilkolben in die erste Betriebsstellung zu bewegen. Bei einer Bewegung in Richtung der zweiten Betriebsstellung ist der Aktivierungsdruck des Hauptventilkolbens derjenige Druck innerhalb der Steuerkammer, der maximal vorliegen darf, um den Hauptventilkolben in die zweite Betriebsstellung zu bewegen.

Zudem kann der Wert des Aktivierungsdrucks insbesondere abhängig von dem vom Gasgenerator zum jeweiligen Zeitpunkt zur Verfügung gestellten Fluiddruck variieren und bei Abnahme des vom Gasgenerator zur Verfügung gestellten Fluiddrucks, insbesondere über den Zeitraum der Befüllung des Luftsacks hinweg, entsprechend abnehmen.

Derjenige Druck, der in einem vorgegebenen Toleranzbereich um den Aktivierungsdruck des Hauptventilkolbens liegt, ist ein Druck, der vorzugsweise möglichst nahe an dem Aktivierungsdruck des Hauptventilkolbens liegt, ohne exakt dem Aktivierungsdruck zu entsprechen. Insbesondere ist darunter derjenige Druck zu verstehen, der möglichst nahe am Aktivierungsdruck liegt, aber gerade noch keine Bewegung des Hauptventilkolbens veranlasst.

Der vorgegebene Toleranzbereich definiert die Grenzen, innerhalb derer der Fluiddruck in der Steuerkammer um den Aktivierungsdruck des Hauptventilkolbens gebracht oder gehalten wird. Insbesondere abhängig von der Betriebsstellung des Hauptventilkolbens kann es sich dabei um eine obere oder eine untere Grenze handeln. Wenn sich also der Hauptventilkolben in der ersten Betriebsstellung befindet, so wird durch den vorgegebenen Toleranzbereich insbesondere eine obere Grenze definiert, wenn sich der Hauptventilkolben in der zweiten Betriebsstellung befindet, so wird durch den vorgegebenen Toleranzbereich insbesondere eine untere Grenze definiert.

Der Volumenstrom des Fluids, insbesondere eines Gases, ist definiert durch das Volumen des Fluids, das pro Zeiteinheit durch einen bestimmten Querschnitt strömt (V/t).

Durch den Überströmkanal des Hauptventils, der die Vorkammer und die Steuerkammer fluidisch miteinander verbindet, kann das Fluid insbesondere von der Ventilkammer in die Steuerkammer strömen, wobei hautsächlich in Abhängigkeit einer Druckdifferenz zwischen der Ventilkammer und der Steuerkammer ein bestimmter Volumenstrom durch den Überströmkanal fließen kann.

Wird der Gasgenerator aktiviert und damit unter Druck gespeichertes Fluid bereitgestellt, steigt der Fluiddruck in der Vorkammer und bewegt den Hauptventilkolben in die zweite Betriebsstellung, in der er die wenigstens eine Ablaufbohrung freigibt. Über den Überströmkanal fließt Fluid in die Steuerkammer, wodurch der Fluiddruck auch von der Steuerkammer her auf den Hauptventilkolben wirkt. Aufgrund der Druckverhältnisse in der Steuerkammer und der Ventilkammer und abhängig von der geometrischen Gestaltung des Hauptventilkörpers wirken auf den Hauptventilkörper also entsprechende Kräfte von Seiten der Steuerkammer und der Ventilkammer her, wobei sich der Hauptventilkolben bei einem Kräfteungleichgewicht entsprechend bewegt.

In einer vorteilhaften Ausführungsform ist der Aktivierungsdruck abhängig von dem vom Gasgenerator zum jeweiligen Zeitpunkt zur Verfügung gestellten Fluiddruck, wobei der Aktivierungsdruck vorzugsweise mit einer Abnahme des vom Gasgenerator zur Verfügung gestellten Fluiddrucks über den Zeitraum der Befüllung des Luftsacks hinweg entsprechend abnimmt.

In einer weiteren vorteilhaften Ausführungsform ist dabei das Mittel zum Steuern eines Fluiddrucks dazu ausgebildet ist, den Fluiddruck in der Steuerkammer auf den jeweiligen Druck zu bringen oder zu halten, der in einem vorgegebenen Toleranzbereich um den jeweiligen Aktivierungsdruck des Hauptventilkolbens liegt.

In einer weiteren vorteilhaften Ausführungsform ist das Mittel zum Steuern des Fluiddrucks als elektrische Steuereinrichtung ausgebildet, die das Pilotventil mit einem Ansteuersignal in pulsweitenmodulierter Form beaufschlagt. Insbesondere abhängig vom Tastgrad, also dem Verhältnis zwischen Pulsdauer und Periodendauer des Ansteuersignals, wird dadurch über einen bestimmten Zeitraum ein entsprechendes abwechselndes und jeweils kurzzeitiges Öffnen und Schließen des Pilotventils, genauer der Pilotventilzulaufbohrung bewirkt. So kann beispielsweise in den kurzen Öffnungsphasen jeweils ein entsprechender Volumenstrom des Fluids über die Pilotventilzulaufbohrung aus der Steuerkammer abgeführt und der Fluiddruck in der Steuerkammer gesenkt werden. Auf diese Weise kann der Fluiddruck in der Steuerkammer auf einen bestimmten Fluiddruck, welcher nur geringfügig vom Aktivierungsdruck des Hauptventilkolbens abweicht, gehalten werden. Dadurch ist die Aktivierungszeit das Hauptventilkolbens für die nächstfolgende Öffnungsbewegung oder Schließbewegung deutlich reduziert bzw. ein schnelles Ansprechen des Hauptventilkolbens gewährleistet.

In einer weiteren vorteilhaften Ausführungsform ist das Mittel zum Steuern des Fluiddrucks ein an und/oder in dem Hauptventil angeordneter Druckminderer. Der Druckminderer umfasst vorteilhafterweise ein Ventil mit einer Eingangsseite und einer Ausgangsseite und einen Drucksensor, wobei der Drucksensor den in der Steuerkammer herrschenden Druck erfasst, und wobei zumindest das Ventil beispielsweise in einer Bohrung im Hauptventilkörper oder im Hauptventilkolben, insbesondere in dem Überströmkanal, angeordnet ist. Dabei ist das Ventil zweckmäßigerweise mit seiner Ausgangsseite angrenzend an die Steuerkammer angeordnet. Der Druckminderer sorgt insbesondere dafür, dass ein bestimmter Fluiddruck, welcher nur geringfügig vom Aktivierungsdruck des Hauptventilkolbens abweicht, in der Steuerkammer nicht überschritten wird. Dazu wird bei steigendem Druck in der Steuerkammer das Ventil immer weiter geschlossen, bis schließlich bei Erreichen des bestimmten Fluiddrucks das Ventil komplett geschlossen ist. Alternativ oder zusätzlich kann das Mittel zum Steuern des Fluiddrucks auch als eine an und/oder in dem Hauptventil angeordnete Druckwaage oder ein an und/oder in dem Hauptventil angeordnetes Stromregelventil ausgebildet sein.

In einer weiteren vorteilhaften Ausführungsform umfasst der Druckminderer ein Ventil mit einer Eingangsseite und einer Ausgangsseite, wobei das Ventil in einer Bohrung im Hauptventilkörper oder im Hauptventilkolben und mit seiner Ausgangsseite angrenzend an die Steuerkammer angeordnet ist, und wobei das Ventil derart ausgebildet ist, dass der Fluiddruck in der Steuerkammer, der in einem vorgegebenen Toleranzbereich um den Aktivierungsdruck des Hauptventilkolbens liegt, nicht überschritten wird.

Der Druckminderer ist dabei vorzugsweise derart ausgebildet, dass bei Vorliegen eines Druckanstiegs in der Steuerkammer das Ventil sukzessive immer weiter geschlossen wird, und dass bei Erreichen des Fluiddrucks in der Steuerkammer, der in einem vorgegebenen Toleranzbereich um den Aktivierungsdruck des Hauptventilkolbens liegt, das Ventil im Wesentlichen vollständig geschlossen wird.

Das Mittel zum Steuern des Fluiddrucks kann zweckmäßigerweise auch als eine Kombination eines Druckminderers und/oder einer Druckwaage und/oder eines Stromregelventils mit einer elektrischen Steuereinrichtung, die das Pilotventil mit einem Ansteuersignal in pulsweitenmodulierter Form beaufschlagt, ausgebildet sein.

In einer weiteren vorteilhaften Ausführungsform ist der Überströmkanal als eine Kolbenbohrung in dem Hauptventilkolben ausgebildet. Durch die Kolbenbohrung kann das Fluid von der Ventilkammer in die Steuerkammer und somit auf die gegenüberliegende Seite des Kolbens strömen, wobei insbesondere in Abhängigkeit einer Druckdifferenz zwischen der Ventilkammer und der Steuerkammer ein bestimmter Volumenstrom durch die Kolbenbohrung fließen kann.

In einer weiteren vorteilhaften Ausführungsform weist der Hauptventilkolben eine der Steuerkammer zugewandte erste Druckwirkfläche und eine der Vorkammer zugewandte zweite Druckwirkfläche auf, wobei die erste Druckwirkfläche größer ist als die zweite Druckwirkfläche. Die unterschiedlich großen Druckwirkflächen des Hauptventilkolbens können beispielsweise durch unterschiedliche Durchmesser des Hauptventilkolbens im Bereich der Steuerkammer und im Bereich der Vorkammer realisiert werden. Es ergibt sich durch die Flächenverhältnisse dieser Durchmesser des Hauptventilkolbens ein Kräftegleichgewicht, sofern der Fluiddruck in der Steuerkammer entsprechend geringer ist, als der Fluiddruck in der Vorkammer. Der Hauptventilkolben kann somit spätestens bei einem gleichen Fluiddruck in der Steuerkammer und in der Vorkammer schalten, d.h. aktiviert werden und sich dabei insbesondere in die erste Betriebsstellung bewegen, in der er die wenigstens eine Ablaufbohrung verschließt.

In einer weiteren vorteilhaften Ausführungsform umfasst die Ventilanordnung einen Drucksensor zu Erfassung des in der Steuerkammer herrschenden Fluiddrucks. Vorzugsweise ist der Drucksensor dabei in der Steuerkammer angeordnet um den Fluiddruck unmittelbar in der Steuerkammer zu erfassen. Bei einer Ausgestaltung des Mittels zum Steuern des Fluiddrucks als ein an und/oder in dem Hauptventil angeordneter Druckminderer, wobei der Druckminderer einen Drucksensor umfasst, ist der Drucksensor insbesondere durch den Drucksensor des Druckminderers gebildet.

In einer weiteren vorteilhaften Ausführungsform ist der vorgegebene Toleranzbereich durch eine maximal zulässige Abweichung von dem Aktivierungsdruck definiert, wobei der vorgegebene Toleranzbereich bzw. die maximal zulässige Abweichung 30%, vorzugsweise 20%, bevorzugt 10%, beträgt. Damit ist ein besonders schnelles Ansprechen des Hauptventilkolbens ermöglicht.

Die zweite Aufgabe wird erfindungsgemäß gelöst durch die Merkmale des Anspruchs 8.

Das erfindungsgemäße Aufprallschutzsystem für ein Kraftfahrzeug umfasst einen Gasgenerator zum Speichern eines Fluids unter Druck und einen Luftsack, wobei der Gasgenerator dazu ausgebildet ist, ansprechend auf ein Aktivierungssignal das Fluid für den Luftsack bereitzustellen. Das Aufprallschutzsystem weist eine erfindungsgemäße Steuervorrichtung zum Steuern eines Volumenstroms des unter Druck gespeicherten Fluids zum Befüllen des Luftsacks auf, wobei die Vorkammer der Durchgangsöffnung des Hauptventils fluidisch mit einem Fluidaustrittskanal des Gasgenerators verbunden ist.

Die für die erfindungsgemäße Steuervorrichtung beschriebenen Vorteile und bevorzugten Ausführungsformen gelten entsprechend auch für das erfindungsgemäße Aufprallschutzsystem.

Vorteilhafterweise weist das Aufprallschutzsystem weiter wenigstens einen Sensor auf, der bei einem Aufprall und/oder zeitlich vor einem Aufprall Parameter zum Berechnen eines voraussichtlichen Aufprallverlaufes erfasst und an eine Steuergeräteeinheit überträgt, die insbesondere dazu ausgelegt ist, aus den erfassten Parametern den voraussichtlichen Aufprallverlauf und basierend darauf den zu jedem Zeitpunkt des Aufprallverlaufes benötigten Volumenstrom des Fluids in den Luftsack zu bestimmen.

Die dritte Aufgabe wird erfindungsgemäß gelöst durch die Merkmale des Anspruchs 9.

Das erfindungsgemäße Verfahren zum Betreiben einer erfindungsgemäßen Steuervorrichtung umfasst folgende Schritte:
Bereitstellen eines unter Druck gespeicherten Fluids; und
Steuern des Fluiddrucks in der Steuerkammer unter Verwendung des Mittels zum Steuern eines Fluiddrucks auf einen Druck, der in einem vorgegebenen Toleranzbereich um den Aktivierungsdruck des Hauptventilkolbens liegt, um die Ansprechzeit des Hauptventilkolbens zu reduzieren.

Die für die erfindungsgemäße Steuervorrichtung beschriebenen Vorteile und bevorzugten Ausführungsformen gelten entsprechend auch für das erfindungsgemäße Verfahren.

In einer vorteilhaften Ausführungsform ist der Aktivierungsdruck abhängig von dem vom Gasgenerator zum jeweiligen Zeitpunkt zur Verfügung gestellten Fluiddruck, vorzugsweise nimmt der Aktivierungsdruck mit einer Abnahme des vom Gasgenerator zur Verfügung gestellten Fluiddrucks über den Zeitraum der Befüllung des Luftsacks hinweg entsprechend ab, wobei im Schritt des Steuerns des Fluiddrucks in der Steuerkammer der Fluiddruck in der Steuerkammer auf den jeweiligen Druck gebracht oder gehalten wird, der in einem vorgegebenen Toleranzbereich um den jeweiligen Aktivierungsdruck des Hauptventilkolbens liegt.

Ausführungsbeispiele der Erfindung werden im Folgenden anhand einer Zeichnung näher erläutert. Darin zeigen:
- Fig. 1: in einer schematischen Längsschnittdarstellung ein Aufprallschutzsystem,
- Fig. 2: ein schematisches Diagramm, das verschiedene Druckverläufe des Aufprallschutzsystems aus Fig. 1 in Abhängigkeit der Zeit darstellt, und
- Fig. 3: ein Ablaufdiagramm eines Verfahrens zum Betreiben der Steuervorrichtung des Aufprallschutzsystems aus Fig. 1.

Einander entsprechende Teile sind in allen Figuren stets mit gleichen Bezugszeichen versehen.

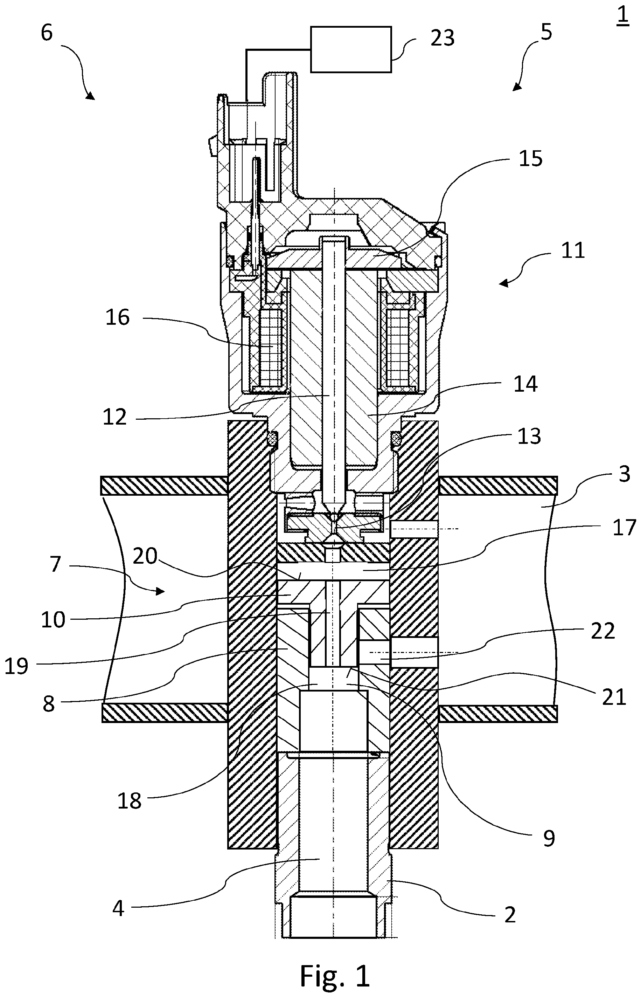

In Fig. 1 ist in einer schematischen Schnittdarstellung ein Ausführungsbeispiel eines Aufprallschutzsystems 1 dargestellt. Das Aufprallschutzsystem 1 für ein Kraftfahrzeug umfasst einen als Kaltgasgenerator ausgebildeten Gasgenerator 2 zum Speichern eines als Gas ausgebildeten Fluids unter Druck sowie einen Luftsack 3. Der Gasgenerator 2 ist dazu ausgebildet, ansprechend auf ein Aktivierungssignal das Fluid für den Luftsack 3 bereitzustellen. Hierzu weist der Gasgenerator 2 ein als Berstscheibe ausgebildetes Verschlusselement (nicht dargestellt) zum Verschließen eines Fluidaustrittskanals 4 des Gasgenerators 2 auf, wobei das Verschlusselement im Falle eines Aufpralls zerstört wird, so dass das unter Druck stehende Fluid aus dem Gasgenerator 2 austreten kann.

Das Aufprallschutzsystem 1 weist ferner eine Steuervorrichtung 5 zum Steuern eines Volumenstroms des unter Druck gespeicherten Fluids zum Befüllen des Luftsacks 3 auf, wobei die Steuervorrichtung 5 eine Ventilanordnung 6 umfasst.

Die Ventilanordnung 6 umfasst ein Hauptventil 7 mit einem Hauptventilkörper 8 mit einer Durchgangsöffnung 9 und einen in der Durchgangsöffnung 9 des Hauptventilkörpers 8 axial beweglichen Hauptventilkolben 10.

Ferner weist die Ventilanordnung 6 ein elektrisch ansteuerbares Pilotventil 11 mit einem Pilotventilkolben 12 und einer Pilotventilzulaufbohrung 13 auf. Der Pilotventilkolben 12 wirkt mit der Pilotventilzulaufbohrung 13 zusammen und verschließt oder öffnet die Pilotventilzulaufbohrung 13 in Abhängigkeit von seiner Position. Das Pilotventil 11 umfasst ferner ein feststehendes Polstück 14 und einen beweglichen Anker 15 auf, wobei der Anker 15 mit dem Pilotventilkolben 12 gekoppelt ist. Dadurch überträgt der Anker 15 seine Bewegung auf den Pilotventilkolben 12. Um die Bewegung des Ankers 15 zu induzieren, umfasst das Pilotventil 11 eine Spule 16, die hierfür bestromt wird. Bei einer Aktivierung der Spule 16 wird ein magnetisches Feld im Magnetkreis aufgebaut und es bildet sich eine Magnetkraft zwischen dem Anker 15 und dem Polstück 14. Diese Magnetkraft bewegt den Anker 15 und somit den Pilotventilkolben 12.

Der Hauptventilkolben 10 des Hauptventils 7 teilt die Durchgangsöffnung 9 in eine fluidisch über die Pilotventilzulaufbohrung 13 mit dem Pilotventil 11 verbundene Steuerkammer 17 und eine fluidisch mit dem Fluidaustrittskanal 4 des Gasgenerators 2 verbundene Vorkammer 18. Ferner weist das Hauptventil 7 einen als Kolbenbohrung im Hauptventilkolben 10 ausgebildeten Überströmkanal 19 auf, der die Vorkammer 18 und die Steuerkammer 17 fluidisch miteinander verbindet.

Der Hauptventilkolben 10 weist eine der Steuerkammer 17 zugewandte erste Druckwirkfläche 20 und eine der Vorkammer 18 zugewandte zweite Druckwirkfläche 21 auf, wobei die erste Druckwirkfläche 20 größer ist als die zweite Druckwirkfläche 21. Die unterschiedlich großen Druckwirkflächen 20, 21 des Hauptventilkolbens 10 können beispielsweise durch unterschiedliche Durchmesser des Hauptventilkolbens 10 im Bereich der Steuerkammer 17 und im Bereich der Vorkammer 18 realisiert werden. Es ergibt sich durch die Flächenverhältnisse dieser Durchmesser des Hauptventilkolbens 10 ein Kräftegleichgewicht, sofern der Fluiddruck in der Steuerkammer 17 entsprechend geringer ist, als der Fluiddruck in der Vorkammer 18. Der Hauptventilkolben 10 kann somit spätestens bei einem gleichen Fluiddruck in der Steuerkammer 17 und in der Vorkammer 18 schalten, d.h. aktiviert werden und sich in eine erste Betriebsstellung bewegen.

Innerhalb des Hauptventilkörpers 8 zweigt eine Ablaufbohrung 22 zum Ablassen des Fluids in den Luftsack 3 von der Durchgangsöffnung 9 ab. Mittels des Fluids bzw. des Fluiddrucks und abhängig von einer Stellung des Pilotventilkolbens 12 verschließt der Hauptventilkolben 10 in einer ersten Betriebsstellung die Ablaufbohrung 22 und gibt die Ablaufbohrung 22 in einer zweiten Betriebsstellung frei.

Zur Reduzierung einer Ansprechzeit des Hauptventilkolbens 10 weist die Ventilanordnung 6 ein Mittel 23 zum Steuern eines Fluiddrucks in der Steuerkammer 17 auf, wobei das Mittel 23 dazu ausgebildet ist, den Fluiddruck in der Steuerkammer 17 auf einen Druck zu bringen oder zu halten, der in einem vorgegebenen Toleranzbereich von 30% um den Aktivierungsdruck des Hauptventilkolbens 10 liegt. Das Mittel 23 zum Steuern des Fluiddrucks ist dabei ausgebildet als elektrische Steuereinrichtung, die das Pilotventil 11 mit einem Ansteuersignal in pulsweitenmodulierter Form beaufschlagt. Insbesondere abhängig vom Tastgrad, also dem Verhältnis zwischen Pulsdauer und Periodendauer des Ansteuersignals, wird dadurch über einen bestimmten Zeitraum mehrmals eine Bewegung des Pilotventilkolbens 12 und somit ein entsprechendes abwechselndes und jeweils kurzzeitiges Öffnen und Schließen des Pilotventils 11, genauer der Pilotventilzulaufbohrung 13 bewirkt. So kann beispielsweise in den kurzen Öffnungsphasen jeweils ein entsprechender Volumenstrom des Fluids über die Pilotventilzulaufbohrung 13 aus der Steuerkammer 17 abgeführt und der Fluiddruck in der Steuerkammer 17 gesenkt werden. Auf diese Weise kann der Fluiddruck in der Steuerkammer 17 auf einem Fluiddruck in dem vorgegebenen Toleranzbereich und somit auf einem Fluiddruck, welcher nur geringfügig vom Aktivierungsdruck des Hauptventilkolbens 10 abweicht, gehalten werden. Dadurch ist die Aktivierungszeit das Hauptventilkolbens 10 für die nächstfolgende Öffnungsbewegung oder Schließbewegung deutlich reduziert bzw. ein schnelles Ansprechen des Hauptventilkolbens 10 gewährleistet.

Das Aufprallschutzsystem 1 wirkt wie folgt:
Das Pilotventil 11 ist als stromlos offenes Pilotventil 11 ausgebildet, das heißt, dass der Pilotventilkolben 12 in unbestromtem Zustand der Spule 16 in einer beliebigen Position verbleibt. Der Pilotventilkolben 12 kann ohne Magnetkraft und die dazu erforderliche Strombeaufschlagung in eine Offenposition geschoben werden. Bei einer Strombeaufschlagung befindet sich der Pilotventilkolben 12 in einer Schließposition.

Nach der Aktivierung des Gasgenerators 2 steigt der Fluiddruck in der Durchgangsöffnung 9 und somit in der Vorkammer 18 an. Das Pilotventil 11 wird geschlossen, der Pilotventilkolben 12 also in eine Schließposition bewegt. Der Fluiddruck steht an der zweiten Druckwirkfläche 21 des Hauptventilkolbens 10 an.

Der Hauptventilkolben 10 wird dadurch axial in Richtung der Steuerkammer 17 gedrückt. Dadurch wird die Ablaufbohrung 22 zunächst geöffnet und Fluid in den Luftsack 3 abgeführt. Durch den Staudruck an dem Hauptventilkolben 10 in der Vorkammer 18 strömt das Fluid zudem über den Überströmkanal 19 in die Steuerkammer 17. Dadurch steigt der Fluiddruck in der Steuerkammer 17 an. Beim Erreichen des Aktivierungsdrucks, welcher hier nun derjenige Druck ist, der mindestens notwendig ist, um den Hauptventilkolben 10 in die erste Betriebsstellung und damit in Schließstellung zu bewegen, bewegt sich der Hauptventilkolben 10 in Richtung Vorkammer 18 und die Ablaufbohrung 22 wird verschlossen.

Wird das Pilotventil 11 in einem nächsten Schritt geöffnet, der Pilotventilkolben 12 also in die Offenposition geschoben, so strömt Fluid über die Pilotventilzulaufbohrung 13 aus der Steuerkammer 17 ab und es verringert sich der Fluiddruck in der Steuerkammer 17. Bei Erreichen des Aktivierungsdrucks, welcher hier nun derjenige Druck ist, der notwendig ist, um den Hauptventilkolben 10 in die zweite Betriebsstellung und damit in Offenstellung zu bewegen, bewegt sich der Hauptventilkolben 10 in Richtung Steuerkammer 17 und die Ablaufbohrung 22 wird geöffnet, wodurch Fluid zu der Ablaufbohrung 22 und anschließend in den Luftsack 3 dosiert wird.

Nach dem Öffnen der Ablaufbohrung 22 wird durch das Mittel 23 zum Steuern des Fluiddrucks in der Steuerkammer 17 mehrmals eine Bewegung des Pilotventilkolbens 12 und somit ein entsprechendes abwechselndes und jeweils kurzzeitiges Öffnen und Schließen des Pilotventils 11, genauer der Pilotventilzulaufbohrung 13 bewirkt. Auf diese Weise wird der Fluiddruck in der Steuerkammer 17 auf einem Fluiddruck in dem vorgegebenen Toleranzbereich und somit auf einem Fluiddruck, der nur entsprechend geringfügig vom Aktivierungsdruck des Hauptventilkolbens 10 abweicht, gehalten. Dadurch ist die Aktivierungszeit das Hauptventilkolbens 10 für die nächstfolgende Schließbewegung deutlich reduziert bzw. ein schnelles Ansprechen des Hauptventilkolbens 10 gewährleistet.

Der Vorgang des Öffnens und Schließens der Ablaufbohrung 22 ist wiederholbar und wird insbesondere in Abhängigkeit von einem Aufprallverlauf durchgeführt, wodurch eine daran angepasste, gezielte Dosierung des Fluids in den Luftsack 3 ermöglicht ist. Bei dem hier gezeigten Ausführungsbeispiel wirkt das Mittel 23 zum Steuern des Fluiddrucks lediglich nach dem erstmaligen aktiven Öffnen des Pilotventils 11 und dem dadurch bedingten Öffnen des Hauptventils 7 bzw. Hauptventilkolbens 10. Es ist aber auch möglich, dass das Mittel 23 zum Steuern des Fluiddrucks erstmalig und/oder zusätzlich nach einem oder jeden weiteren Öffnen des Pilotventils 11 und dem jeweils dadurch bedingten Öffnen des Hauptventilkolbens 10 wirkt. Zudem ist es möglich, dass das Mittel 23 zum Steuern des Fluiddrucks alternativ oder zusätzlich nach einem Schließen des Pilotventils 11 und dem dadurch bedingten Schließen des Hauptventilkolbens 10 entsprechend wirkt.

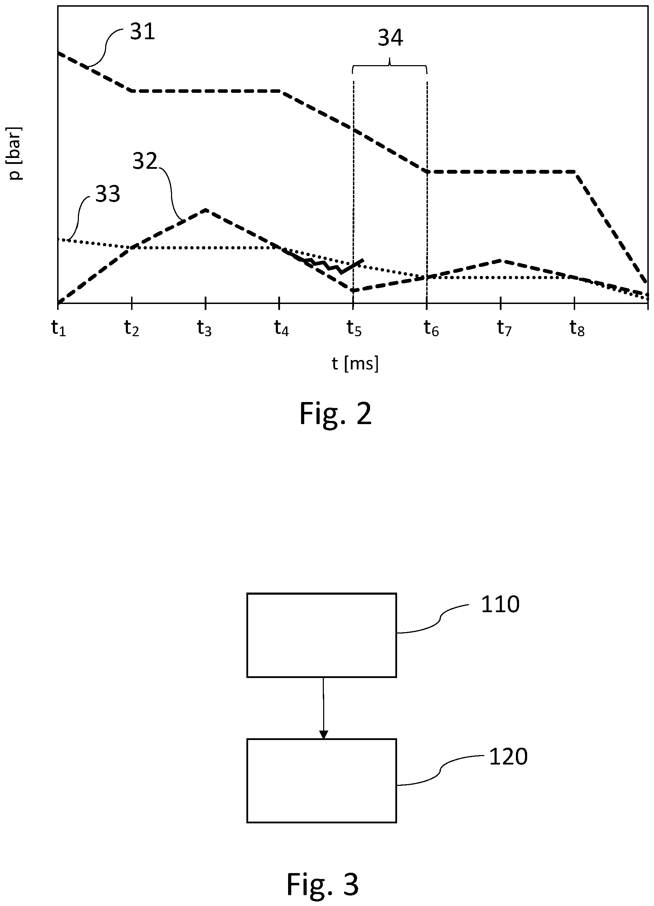

Fig. 2 zeigt ein schematisches Diagramm, das verschiedene Druckverläufe des Aufprallschutzsystems 1 aus Fig. 1 in Abhängigkeit der Zeit t darstellt.

Dabei ist ein Druckverlauf des Gasgenerator-Fluiddrucks, also des im Gasgenerator 2 vorherrschenden und vom Gasgenerator 2 zur Verfügung stellbaren Fluiddrucks, mit dem Bezugszeichen 31 versehen. Ein Druckverlauf des Steuerkammer-Fluiddrucks, also des in der Steuerkammer 17 vorherrschenden Fluiddrucks, ist mit dem Bezugszeichen 32 versehen. Der mit dem Bezugszeichen 33 bezeichnete Graph stellt den notwendigen Aktivierungsdruck zum Ansprechen des Hauptventilkolbens 10 zur Durchführung einer Öffnungsbewegung und/oder einer Schließbewegung und damit letztlich zum Öffnen und Schließen der Ablaufbohrung 22 dar. Der Aktivierungsdruck 33 ist also derjenige theoretische Druck innerhalb der Steuerkammer 17, der erforderlich ist, um den Hauptventilkolben 10 zu bewegen. Dabei ist sowohl eine Bewegung in Richtung der ersten Betriebsstellung als auch eine Bewegung in Richtung der zweiten Betriebsstellung umfasst.

Im Folgenden wird zunächst das Verhalten des Aufprallschutzsystems 1 bzw. der entsprechenden Druckverläufe ohne das Mittel 23 zum Steuern des Fluiddrucks in der Steuerkammer 17, also des Steuerkammer-Fluiddrucks 32 beschrieben.

Nach der Aktivierung des Gasgenerators 2 zum Zeitpunkt t₁ und geschlossenem Pilotventil 11 wird die Ablaufbohrung 22 zunächst geöffnet und Fluid strömt aus dem Gasgenerator 2 über die Ablaufbohrung 22 in den Luftsack 3 und über den Überströmkanal 19 in die Steuerkammer 17. Dadurch nimmt der Gasgenerator-Fluiddruck 31 ab und der Steuerkammer-Fluiddruck 32 steigt zunächst an. Zum Zeitpunkt t₂ erreicht der Steuerkammer-Fluiddruck 32 den Aktivierungsdruck 33, wodurch der Hauptventilkolben 10 in Richtung Vorkammer 18 bewegt und die Ablaufbohrung 22 verschlossen wird. Es strömt somit kein Fluid mehr über die Ablaufbohrung 22 in den Luftsack 3 ab. Allerdings strömt noch Fluid über den Überströmkanal 19 in die Steuerkammer 17, was zu einem weiteren Anstieg des Steuerkammer-Fluiddrucks 32 führt.

Wird das Pilotventil 11 in einem nächsten Schritt zum Zeitpunkt t₃ geöffnet, der Pilotventilkolben 12 also in die Offenposition geschoben, so strömt Fluid über die Pilotventilzulaufbohrung 13 aus der Steuerkammer 17 ab und es verringert sich dadurch allmählich der Steuerkammer-Fluiddruck 32. Aber erst bei Erreichen des Aktivierungsdrucks 33 zum Zeitpunkt t₄ und damit erst nach einer verhältnismäßig langen Zeitdauer bewegt sich dann der Hauptventilkolben 10 in Richtung Steuerkammer 17 und die Ablaufbohrung 22 wird geöffnet und so Fluid über die Ablaufbohrung 22 in den Luftsack 3 dosiert. Durch die weiterhin geöffnete Pilotventilzulaufbohrung 13 strömt zudem weiterhin Fluid aus der Steuerkammer 17 ab, was zu einem weiteren Abfall des Steuerkammer-Fluiddrucks 32 führt.

Zum Zeitpunkt t₅ wird das Pilotventil 11 geschlossen, wodurch der Steuerkammer-Fluiddruck 32 wieder ansteigt. Aber erst bei Erreichen des Aktivierungsdrucks 33 zum Zeitpunkt t₆ und damit wiederum erst nach einer verhältnismäßig langen Zeitdauer bewegt sich der Hauptventilkolben 10 in Richtung Vorkammer 18 und die Ablaufbohrung 22 wird verschlossen.

Zum Zeitpunkt t₇ wird das Pilotventil 11 nochmals geöffnet und es verringert sich der Steuerkammer-Fluiddruck 32. Bei Erreichen des Aktivierungsdrucks 33 zum Zeitpunkt t₈ bewegt sich der Hauptventilkolben 10 in Richtung Steuerkammer 17 und die Ablaufbohrung 22 wird geöffnet, wodurch nochmals Fluid über die Ablaufbohrung 22 in den Luftsack 3 dosiert wird.

Aus den dargestellten Druckverläufen ist ersichtlich, dass jeweils ein gewisser Zeitverlust bei den Schaltzeitpunkten des Pilotventils 11 zu den Zeitpunkten t₃, t₅ und t₇ zwischen dem Öffnen bzw. dem Schließen des Pilotventils 11 und dem jeweils dadurch bedingten Öffnen bzw. Schließen des Hauptventils 7 vorliegt. Eine solche zeitliche Verzögerung 34 liegt an sich also beispielsweise zwischen dem Schließen des Pilotventils 11 zum Zeitpunkt t₅ und dem dadurch bedingten Schließen des Hauptventils 7 (erst) zum Zeitpunkt t₆ vor und ist hier beispielhaft in Fig. 2 eingezeichnet.

Um im vorliegenden Ausführungsbeispiel nun die Aktivierungszeit des Hauptventilkolbens 10 für eine Schließbewegung zu reduzieren bzw. hier ein schnelles Ansprechen des Hauptventilkolbens 10 zu gewährleisten, wird zum bzw. ab dem Zeitpunkt t₄ durch das Mittel 23 zum Steuern des Fluiddrucks in der Steuerkammer 17 mehrmals eine Bewegung des Pilotventilkolbens 12 und somit ein entsprechendes abwechselndes und jeweils kurzzeitiges Öffnen und Schließen des Pilotventils 11, genauer der Pilotventilzulaufbohrung 13 bewirkt. Auf diese Weise wird der Steuerkammer-Fluiddruck 32 in dem vorgegebenen Toleranzbereich um den Aktivierungsdruck 33 und somit auf einen Fluiddruck, welcher nur geringfügig vom Aktivierungsdruck 33 des Hauptventilkolbens 10 abweicht, gehalten. In der Fig. 2 ist der durch das Mittel 23 zum Steuern des Fluiddrucks in der Steuerkammer 17 ab dem Zeitpunkt t₄ resultierende Steuerkammer-Fluiddruck 32 mit einer Volllinie dargestellt.

Aus Fig. 2 ist ersichtlich, dass zum dem Zeitpunkt t₅, zu dem das Pilotventil 11 (wieder) geschlossen wird, der Steuerkammer-Fluiddruck 32 nahezu ohne oder verglichen mit dem Druckverlauf ohne das Mittel 23 zum Steuern des Fluiddrucks nur mit einem sehr geringen Zeitverlust den Aktivierungsdruck 33 des Hauptventilkolbens 10 erreicht und somit der Hauptventilkolben 10 bereits zu diesem Zeitpunkt anspricht und die Ablaufbohrung 22 verschließt. Es wird dadurch also ein schnelles Ansprechen des Hauptventilkolbens 10 und damit ein schnelles Schließen der Ablaufbohrung 22 gewährleistet. Die zeitliche Verzögerung 34, also der Zeitverlust zwischen dem Schließen des Pilotventils 11 und dem dadurch bedingten Schließen des Hauptventils 7 bzw. des Hauptventilkolbens 10 ist hier also nahezu vollständig reduziert.

Die im weiteren Zeitverlauf daran entsprechend angepassten, modifizierten Druckverläufe sind der Übersichtlichkeit halber nicht dargestellt, dürften aber für den Fachmann anhand der obigen Ausführungen offensichtlich sein.

An dieser Stelle sei nochmals darauf hingewiesen, dass bei dem hier gezeigten Ausführungsbeispiel das Mittel 23 zum Steuern des Fluiddrucks lediglich nach dem erstmaligen aktiven Öffnen des Pilotventils 11 und dem dadurch bedingen Öffnen des Hauptventils 7 zum Zeitpunkt t₄ wirkt. Es ist selbstverständlich aber auch möglich, dass das Mittel 23 zum Steuern des Fluiddrucks alternativ oder zusätzlich auch nach einem oder allen anderen Schaltzeitpunkten des Pilotventils 11 zu den Zeitpunkten t₁, t₅, t₇ und dem dadurch bedingten Schließen oder Öffnen des Hauptventils 7 zu den Zeitpunkten t₂, t₆, t₈ wirkt.

Fig. 3 zeigt ein Ablaufdiagramm eines Verfahrens 100 zum Betreiben der Steuervorrichtung 5 des Aufprallschutzsystems 1 aus Fig. 1.

In einem Schritt 110 wird zunächst das unter Druck gespeicherte Fluid bereitgestellt und insbesondere in die Durchgangsöffnung 9 und die Steuerkammer 17 des Hauptventils 7 geleitet. In einem Schritt 120 (zum bzw. ab dem Zeitpunkt t₄) wird unter Verwendung des Mittels 23 zum Steuern des Fluiddrucks der Fluiddruck in der Steuerkammer 17 auf einen Druck gesteuert, also auf einen Druck gebracht oder gehalten, der in einem vorgegebenen Toleranzbereich um den Aktivierungsdruck des Hauptventilkolbens 10 liegt. Dadurch wird die Ansprechzeit des Hauptventilkolbens 10 reduziert.

### Bezugszeichenliste

- 1: Aufprallschutzsystem
- 2: Gasgenerator
- 3: Luftsack
- 4: Fluidaustrittskanal
- 5: Steuervorrichtung
- 6: Ventilanordnung
- 7: Hauptventil
- 8: Hauptventilkörper
- 9: Durchgangsöffnung
- 10: Hauptventilkolben
- 11: Pilotventil
- 12: Pilotventilkolben
- 13: Pilotventilzulaufbohrung
- 14: Polstück
- 15: Anker
- 16: Spule
- 17: Steuerkammer
- 18: Vorkammer
- 19: Überströmkanal
- 20: erste Druckwirkfläche
- 21: zweite Druckwirkfläche
- 22: Ablaufbohrung
- 23: Mittel zum Steuern eines Fluiddrucks
- 31: Gasgenerator-Fluiddruck
- 32: Steuerkammer-Fluiddruck
- 33: Aktivierungsdruck
- 34: zeitliche Verzögerung
- 110: Bereitstellen
- 120: Steuern

## Patentansprüche

1. Steuervorrichtung (5) für einen Gasgenerator (2) zum Steuern eines Volumenstroms eines unter Druck gespeicherten Fluids zum Befüllen eines Luftsacks (3) eines Kraftfahrzeugs mit einer Ventilanordnung (6), umfassend ein Hauptventil (7) mit einem Hauptventilkörper (8) mit einer Durchgangsöffnung (9) und einem in der Durchgangsöffnung (9) des Hauptventilkörpers (8) axial beweglichen Hauptventilkolben (10) sowie ein elektrisch ansteuerbares Pilotventil (11) mit einem Pilotventilkolben (12) und einer Pilotventilzulaufbohrung (13), wobei der Hauptventilkolben (10) die Durchgangsöffnung (9) in eine fluidisch über die Pilotventilzulaufbohrung (13) mit dem Pilotventil (11) verbundene Steuerkammer (17) und eine fluidisch mit dem Gasgenerator (2) verbindbare Vorkammer (18) teilt, wobei das Hauptventil (7) einen Überströmkanal (19) aufweist, der die Vorkammer (18) und die Steuerkammer (17) fluidisch miteinander verbindet, wobei innerhalb des Hauptventilkörpers (8) mindestens eine Ablaufbohrung (22) zum Ablassen des Fluids in den Luftsack (3) von der Durchgangsöffnung (9) abzweigt, und wobei mittels des Fluids und abhängig von einer Stellung des Pilotventilkolbens (12) der Hauptventilkolben (10) in einer ersten Betriebsstellung die wenigstens eine Ablaufbohrung (22) verschließt und in einer zweiten Betriebsstellung die wenigstens eine Ablaufbohrung (22) freigibt, **dadurch gekennzeichnet, dass** die Ventilanordnung (6) zur Reduzierung einer Ansprechzeit des Hauptventilkolbens (10) ein Mittel (23) zum Steuern eines Fluiddrucks in der Steuerkammer (17) aufweist, und dass das Mittel (23) zum Steuern eines Fluiddrucks dazu ausgebildet ist, den Fluiddruck in der Steuerkammer (17) auf einen Druck zu bringen oder zu halten, der in einem vorgegebenen Toleranzbereich um einen Aktivierungsdruck (33) des Hauptventilkolbens (10) liegt.

2. Steuervorrichtung (5) nach Anspruch 1, **dadurch gekennzeichnet, dass** der Aktivierungsdruck (33) abhängig ist von dem vom Gasgenerator (2) zum jeweiligen Zeitpunkt zur Verfügung gestellten Fluiddruck.

3. Steuervorrichtung (5) nach Anspruch 2, **dadurch gekennzeichnet, dass** der Aktivierungsdruck (33) mit einer Abnahme des vom Gasgenerator (2) zur Verfügung gestellten Fluiddrucks über den Zeitraum der Befüllung des Luftsacks (3) hinweg entsprechend abnimmt.

4. Steuervorrichtung (5) nach Anspruch 2 oder 3, **dadurch gekennzeichnet, dass** das Mittel (23) zum Steuern eines Fluiddrucks dazu ausgebildet ist, den Fluiddruck in der Steuerkammer (17) auf den jeweiligen Druck zu bringen oder zu halten, der in einem vorgegebenen Toleranzbereich um den jeweiligen Aktivierungsdruck (33) des Hauptventilkolbens (10) liegt.

5. Steuervorrichtung (5) nach einem der vorangehenden Ansprüche, **dadurch gekennzeichnet, dass** das Mittel (23) zum Steuern des Fluiddrucks als elektrische Steuereinrichtung ausgebildet ist, die das Pilotventil (11) mit einem Ansteuersignal in pulsweitenmodulierter Form beaufschlagt.

6. Steuervorrichtung (5) nach einem der vorangehenden Ansprüche, **dadurch gekennzeichnet, dass** das Mittel (23) zum Steuern des Fluiddrucks ein an und/oder in dem Hauptventil angeordneter Druckminderer ist.

7. Steuervorrichtung (5) nach Anspruch 6, **dadurch gekennzeichnet, dass** der Druckminderer ein Ventil mit einer Eingangsseite und einer Ausgangsseite umfasst, dass das Ventil in einer Bohrung im Hauptventilkörper (8) oder im Hauptventilkolben (10) und mit seiner Ausgangsseite angrenzend an die Steuerkammer (17) angeordnet ist, und dass das Ventil derart ausgebildet ist, dass der Fluiddruck in der Steuerkammer (17), der in einem vorgegebenen Toleranzbereich um den Aktivierungsdruck (33) des Hauptventilkolbens (10) liegt, nicht überschritten wird.

8. Steuervorrichtung (5) nach Anspruch 7, **dadurch gekennzeichnet, dass** der Druckminderer derart ausgebildet ist, dass bei Vorliegen eines Druckanstiegs in der Steuerkammer (17) das Ventil sukzessive immer weiter geschlossen wird, und dass bei Erreichen des Fluiddrucks in der Steuerkammer (17), der in einem vorgegebenen Toleranzbereich um den Aktivierungsdruck (33) des Hauptventilkolbens (10) liegt, das Ventil im Wesentlichen vollständig geschlossen wird.

9. Steuervorrichtung (5) nach einem der vorangehenden Ansprüche, **dadurch gekennzeichnet, dass** der Überströmkanal (19) als eine Kolbenbohrung in dem Hauptventilkolben (10) ausgebildet ist.

10. Steuervorrichtung (5) nach einem der vorangehenden Ansprüche, **dadurch gekennzeichnet, dass** der Hauptventilkolben (10) eine der Steuerkammer (17) zugewandte erste Druckwirkfläche (20) und eine der Vorkammer (18) zugewandte zweite Druckwirkfläche (21) aufweist, wobei die erste Druckwirkfläche (20) größer ist als die zweite Druckwirkfläche 21).

11. Steuervorrichtung (5) nach einem der vorangehenden Ansprüche, **dadurch gekennzeichnet, dass** die Ventilanordnung (6) einen Drucksensor zur Erfassung des in der Steuerkammer (17) herrschenden Fluiddrucks umfasst.

12. Steuervorrichtung (5) nach Anspruch 11, **dadurch gekennzeichnet, dass** der Drucksensor in der Steuerkammer (17) angeordnet ist, wobei der Drucksensor dazu ausgebildet ist, den Fluiddruck unmittelbar in der Steuerkammer (17) zu erfassen.

13. Steuervorrichtung (5) nach einem der vorangehenden Ansprüche, **dadurch gekennzeichnet, dass** der vorgegebene Toleranzbereich durch eine maximal zulässige Abweichung von dem Aktivierungsdruck definiert ist, und dass der vorgegebene Toleranzbereich 30%, vorzugsweise 20%, bevorzugt 10%, beträgt.

14. Aufprallschutzsystem (1) für ein Kraftfahrzeug mit einem Gasgenerator (2) zum Speichern eines Fluids unter Druck und einem Luftsack (3), wobei der Gasgenerator (2) dazu ausgebildet ist, ansprechend auf ein Aktivierungssignal das Fluid für den Luftsack (3) bereitzustellen, und mit einer Steuervorrichtung (5) zum Steuern eines Volumenstroms des unter Druck gespeicherten Fluids zum Befüllen des Luftsacks (3) nach einem der Ansprüche 1 bis 13, wobei die Vorkammer (18) der Durchgangsöffnung (9) des Hauptventils (7) fluidisch mit einem Fluidaustrittskanal (4) des Gasgenerators (2) verbunden ist.

15. Verfahren zum Betreiben einer Steuervorrichtung (5) nach einem der Ansprüche 1 bis 13, wobei das Verfahren folgende Schritte umfasst:
Bereitstellen (110) eines unter Druck gespeicherten Fluids; und
Steuern (120) des Fluiddrucks in der Steuerkammer (17) unter Verwendung des Mittels (23) zum Steuern eines Fluiddrucks auf einen Druck, der in einem vorgegebenen Toleranzbereich um den Aktivierungsdruck des Hauptventilkolbens (10) liegt, um die Ansprechzeit des Hauptventilkolbens (10) zu reduzieren.

16. Verfahren nach Anspruch 15, wobei der Aktivierungsdruck (33) abhängig ist von dem vom Gasgenerator (2) zum jeweiligen Zeitpunkt zur Verfügung gestellten Fluiddruck (31), der Aktivierungsdruck (33) vorzugsweise mit einer Abnahme des vom Gasgenerator (2) zur Verfügung gestellten Fluiddrucks (31) über den Zeitraum der Befüllung des Luftsacks (3) hinweg entsprechend abnimmt, und wobei im Schritt des Steuerns (120) des Fluiddrucks in der Steuerkammer (17) der Fluiddruck in der Steuerkammer (17) auf den jeweiligen Druck gebracht oder gehalten wird, der in einem vorgegebenen Toleranzbereich um den jeweiligen Aktivierungsdruck (33) des Hauptventilkolbens (10) liegt.

## Claims

1. Control device (5) for a gas generator (2) for controlling a volume flow of a fluid stored under pressure for filling an airbag (3) of a motor vehicle, having a valve assembly (6), comprising a main valve (7) having a main valve body (8) with a passage opening (9) and a main valve piston (10) axially movable in the passage opening (9) of the main valve body (8), and comprising an electrically actuable pilot valve (11) with a pilot valve piston (12) and a pilot valve inflow bore (13), wherein the main valve piston (10) divides the passage opening (9) into a control chamber (17) fluidically connected to the pilot valve (11) via the pilot valve inflow bore (13) and a prechamber (18) fluidically connectable to the gas generator (2), wherein the main valve (7) has an overflow channel (19), which fluidically connects the prechamber (18) and the control chamber (17) to one another, wherein, within the main valve body (8), at least one outflow bore (22) for discharging the fluid into the airbag (3) branches off from the passage opening (9), and wherein, by means of the fluid and depending on a position of the pilot valve piston (12), the main valve piston (10) closes the at least one outflow bore (22) in a first operating position and opens the at least one outflow bore (22) in a second operating position, **characterized in that** the valve assembly (6), for reducing a response time of the main valve piston (10), has a means (23) for controlling a fluid pressure in the control chamber (17), and **in that** the means (23) for controlling a fluid pressure is designed to move or to keep the fluid pressure in the control chamber (17) to/at a pressure which lies within a predefined tolerance range around an activation pressure (33) of the main valve piston (10).

2. Control device (5) according to Claim 1, **characterized in that** the activation pressure (33) is dependent on the fluid pressure provided by the gas generator (2) at the respective time.

3. Control device (5) according to Claim 2, **characterized in that** the activation pressure (33) correspondingly decreases with a decrease in the fluid pressure provided by the gas generator (2) over the time period for filling the airbag (3).

4. Control device (5) according to Claim 2 or 3, **characterized in that** the means (23) for controlling a fluid pressure is designed to move or to keep the fluid pressure in the control chamber (17) to/at the respective pressure, which lies within a predefined tolerance range around the respective activation pressure (33) of the main valve piston (10).

5. Control device (5) according to one of the preceding claims, **characterized in that** the means (23) for controlling the fluid pressure is designed as an electrical control device which applies an actuation signal in pulse-width-modulated form to the pilot valve (11).

6. Control device (5) according to one of the preceding claims, **characterized in that** the means (23) for controlling the fluid pressure is a pressure reducer arranged on and/or in the main valve.

7. Control device (5) according to Claim 6, **characterized in that** the pressure reducer comprises a valve with an inlet side and an outlet side, **in that** the valve is arranged in a bore in the main valve body (8) or in the main valve piston (10) and with its outlet side adjacent to the control chamber (17), and **in that** the valve is designed in such a way that fluid pressure in the control chamber (17), which fluid pressure lies within a predefined tolerance range around the activation pressure (33) of the main valve piston (10), is not exceeded.

8. Control device (5) according to Claim 7, **characterized in that** the pressure reducer is designed in such a way that, when there is a pressure increase in the control chamber (17), the valve is gradually increasingly closed, and **in that**, when the fluid pressure in the control chamber (17), which fluid pressure lies within a predefined tolerance range around the activation pressure (33) of the main valve piston (10), is reached, the valve is substantially completely closed.

9. Control device (5) according to one of the preceding claims, **characterized in that** the overflow channel (19) is designed as a piston bore in the main valve piston (10).

10. Control device (5) according to one of the preceding claims, **characterized in that** the main valve piston (10) has a first active pressure area (20) facing the control chamber (17) and a second active pressure area (21) facing the prechamber (18), wherein the first active pressure area (20) is larger than the second active pressure area (21).

11. Control device (5) according to one of the preceding claims, **characterized in that** the valve assembly (6) comprises a pressure sensor for detecting the fluid pressure prevailing in the control chamber (17).

12. Control device (5) according to Claim 11, **characterized in that** the pressure sensor is arranged in the control chamber (17), wherein the pressure sensor is designed to detect the fluid pressure directly in the control chamber (17).

13. Control device (5) according to one of the preceding claims, **characterized in that** the predefined tolerance range is defined by a maximum permissible deviation from the activation pressure, and **in that** the predefined tolerance range is 30%, preferably 20%, preferably 10%.

14. Impact protection system (1) for a motor vehicle having a gas generator (2) for storing a fluid under pressure and having an airbag (3), wherein the gas generator (2) is designed to provide the fluid for the airbag (3) in response to an activation signal, and having a control device (5) for controlling a volume flow of the fluid stored under pressure for filling the airbag (3) according to one of Claims 1 to 13, wherein the prechamber (18) of the passage opening (9) of the main valve (7) is fluidically connected to a fluid outlet duct (4) of the gas generator (2).

15. Method for operating a control device (5) according to one of Claims 1 to 13, wherein the method comprises the following steps: providing (110) a fluid stored under pressure; and controlling (120) the fluid pressure in the control chamber (17) using the means (23) for controlling a fluid pressure to a pressure which lies within a predefined tolerance range around the activation pressure of the main valve piston (10) in order to reduce the response time of the main valve piston (10).

16. Method according to Claim 15, wherein the activation pressure (33) is dependent on the fluid pressure (31) provided by the gas generator (2) at the respective time, the activation pressure (33) preferably correspondingly decreases with a decrease in the fluid pressure (31) provided by the gas generator (2) over the period for filling of the airbag (3), and wherein, in the step of controlling (120) the fluid pressure in the control chamber (17), the fluid pressure in the control chamber (17) is moved to or held at the respective pressure which lies within a predefined tolerance range around the respective activation pressure (33) of the main valve piston (10).

## Revendications

1. Dispositif de commande (5) pour un générateur de gaz (2) permettant de commander un débit volumique d'un fluide stocké sous pression pour remplir un coussin pneumatique (3) d'un véhicule automobile, pourvu d'un agencement de soupape (6), comprenant une soupape principale (7) pourvue d'un corps de soupape principale (8) avec une ouverture de passage (9) et un piston de soupape principale (10) axialement mobile dans l'ouverture de passage (9) du corps de soupape principale (8), ainsi qu'une soupape pilote (11) à pilotage électrique et pourvue d'un piston de soupape pilote (12) et d'un alésage d'alimentation de soupape pilote (13), dans lequel le piston de soupape principale (10) divise l'ouverture de passage (9) en une chambre de commande (17) reliée fluidiquement à la soupape pilote (11) par l'intermédiaire de l'alésage d'alimentation de soupape pilote (13) et en une préchambre (18) pouvant être reliée fluidiquement au générateur de gaz (2), dans lequel la soupape principale (7) présente un canal de trop-plein (19) qui relie fluidiquement l'une à l'autre la préchambre (18) et la chambre de commande (17), dans lequel, à l'intérieur du corps de soupape principale (8), au moins un alésage d'écoulement (22) bifurque de l'ouverture de passage (9) pour évacuer le fluide dans le coussin pneumatique (3), et dans lequel, au moyen du fluide et en fonction d'une position du piston de soupape pilote (12), le piston de soupape principale (10) ferme ledit au moins un alésage d'écoulement (22) dans une première position de fonctionnement et libère ledit au moins un alésage d'écoulement (22) dans une deuxième position de fonctionnement, **caractérisé en ce que** l'agencement de soupape (6) présente pour la réduction d'un temps de réponse du piston de soupape principale (10) un moyen (23) pour commander une pression de fluide dans la chambre de commande (17), et **en ce que** le moyen (23) pour commander la pression de fluide est réalisé pour porter ou maintenir la pression de fluide dans la chambre de commande (17) à une pression qui est située dans une plage de tolérance prédéfinie autour d'une pression d'activation (33) du piston de soupape principale (10).

2. Dispositif de commande (5) selon la revendication 1, **caractérisé en ce que** la pression d'activation (33) dépend de la pression de fluide fournie par le générateur de gaz (2) à un moment donné.

3. Dispositif de commande (5) selon la revendication 2, **caractérisé en ce que** la pression d'activation (33) diminue de façon correspondante avec une diminution de la pression de fluide fournie par le générateur de gaz (2) pendant la période de remplissage du coussin pneumatique (3).

4. Dispositif de commande (5) selon la revendication 2 ou 3, **caractérisé en ce que** le moyen (23) pour commander la pression de fluide est réalisé pour porter ou maintenir la pression de fluide dans la chambre de commande (17) à la pression respective qui est située dans une plage de tolérance prédéfinie autour d'une pression d'activation (33) respective du piston de soupape principale (10).

5. Dispositif de commande (5) selon l'une quelconque des revendications précédentes, **caractérisé en ce que** le moyen (23) pour commander la pression de fluide est réalisé sous la forme d'un équipement de commande électrique qui soumet la soupape pilote (11) à un signal de pilotage sous forme modulée en largeur d'impulsion.

6. Dispositif de commande (5) selon l'une quelconque des revendications précédentes, **caractérisé en ce que** le moyen (23) pour commander la pression de fluide est un réducteur de pression disposé sur et/ou dans la soupape principale.

7. Dispositif de commande (5) selon la revendication 6, **caractérisé en ce que** le réducteur de pression comprend une soupape ayant un côté entrée et un côté sortie, **en ce que** la soupape est disposée dans un alésage dans le corps de soupape principale (8) ou dans le piston de soupape principale (10) et de manière adjacente à la chambre de commande (17) par son côté sortie, et **en ce que** la soupape est réalisée de telle sorte que la pression de fluide dans la chambre de commande (17) qui est située dans une plage de tolérance prédéfinie autour de la pression d'activation (33) du piston de soupape principale (10) n'est pas dépassée.

8. Dispositif de commande (5) selon la revendication 7, **caractérisé en ce que** le réducteur de pression est réalisé de telle sorte que la soupape est successivement de plus en plus fermée en présence d'une montée en pression dans la chambre de commande (17), et **en ce que** la soupape est substantiellement entièrement fermée si la pression de fluide dans la chambre de commande (17), qui est située dans une plage de tolérance prédéfinie autour de la pression d'activation (33) du piston de soupape principale (10), est atteinte.

9. Dispositif de commande (5) selon l'une quelconque des revendications précédentes, **caractérisé en ce que** le canal de trop-plein (19) est réalisé sous forme d'alésage de piston dans le piston de soupape principale (10).

10. Dispositif de commande (5) selon l'une quelconque des revendications précédentes, **caractérisé en ce que** le piston de soupape principale (10) présente une première surface active de pression (20) tournée vers la chambre de commande (17) et une deuxième surface active de pression (21) tournée vers la préchambre (18), la première surface active de pression (20) étant plus grande que la deuxième surface active de pression (21).

11. Dispositif de commande (5) selon l'une quelconque des revendications précédentes, **caractérisé en ce que** l'agencement de soupape (6) comprend un capteur de pression pour détecter la pression de fluide régnant dans la chambre de commande (17).

12. Dispositif de commande (5) selon la revendication 11, **caractérisé en ce que** le capteur de pression est disposé dans la chambre de commande (17), le capteur de pression étant réalisé pour détecter la pression de fluide directement dans la chambre de commande (17).

13. Dispositif de commande (5) selon l'une quelconque des revendications précédentes, **caractérisé en ce que** la plage de tolérance prédéfinie est définie par un écart admissible maximal par rapport à la pression d'activation, et **en ce que** la plage de tolérance prédéfinie est de 30 %, de préférence de 20 %, de préférence de 10 %.

14. Système antichocs (1) pour un véhicule automobile comprenant un générateur de gaz (2) pour stocker un fluide sous pression et un coussin pneumatique (3), dans lequel le générateur de gaz (2) est réalisé pour fournir le fluide pour le coussin pneumatique (3) en réponse à un signal d'activation, et comprenant un dispositif de commande (5) pour commander un débit volumique du fluide stocké sous pression pour remplir le coussin pneumatique (3) selon l'une quelconque des revendications 1 à 13, la préchambre (18) de l'ouverture de passage (9) de la soupape principale (7) étant reliée fluidiquement à un canal de sortie de fluide (4) du générateur de gaz (2).

15. Procédé permettant de faire fonctionner un dispositif de commande (5) selon l'une quelconque des revendications 1 à 13, le procédé comprenant les étapes suivantes consistant à : fournir (110) un fluide stocké sous pression ; et commander (120) la pression de fluide dans la chambre de commande (17) en utilisant le moyen (23) pour commander une pression de fluide à une pression qui est située dans une plage de tolérance prédéfinie autour de la pression d'activation du piston de soupape principale (10) pour réduire le temps de réponse du piston de soupape principale (10).

16. Procédé selon la revendication 15, dans lequel la pression d'activation (33) dépend de la pression de fluide (31) fournie par le générateur de gaz (2) à un moment donné, la pression d'activation (33) diminue de façon correspondante de préférence avec une diminution de la pression de fluide (31) fournie par le générateur de gaz (2) pendant la période du remplissage du coussin pneumatique (3), et dans lequel à l'étape de commande (120) de la pression de fluide dans la chambre de commande (17), la pression de fluide dans la chambre de commande (17) est portée ou maintenue à la pression respective qui est située dans une plage de tolérance prédéfinie autour de la pression d'activation (33) respective du piston de soupape principale (10).
